# EUROPÄISCHE PATENTSCHRIFT

(11) **EP 0 386 540 B1**
(45) Veröffentlichungstag und Bekanntmachung des Hinweises auf die Patenterteilung: **30.11.1994**
(21) Anmeldenummer: 90103484.3
(22) Anmeldetag: 23.02.1990
(51) Int. Cl.: A01C 17/00

(54) **System zur Erstellung einer Schleuderdüngerstreuerbaureihe**
System for making a series broadcaster
Système de fabrication d'une série d'épandeurs de capacité croissante

(30) Priorität: 04.03.1989 DE 3907010
(43) Veröffentlichungstag der Anmeldung: 12.09.1990
(73) Patentinhaber: Amazonen-Werke H. Dreyer GmbH & Co. KG, D-49205 Hasbergen (DE)
(72) Erfinder: Dreyer, Heinz, Dipl.-Ing., Dr., D-4507 Hasbergen (DE)
(74) Vertreter: Schuster, Thomas, Dipl.-Phys.

(56) Entgegenhaltungen:
- EP-A- 0 194 733
- EP-A- 0 216 058
- DE-A- 1 457 769
- DE-A- 1 557 961
- DE-A- 3 722 507

## Beschreibung

Die Erfindung betrifft eine Schleuderdüngerstreuerbaureihe nach dem Oberbegriff des Anspruchs 1.

Vom Markt besteht die Forderung, für verschiedene Schlepper bzw. Betriebsgrößen verschieden große, d.h. im Fassungsvermögen bzw. Tragvermögen verschiedene Maschinen zu schaffen.

Um dieser Forderung gerecht zu werden, wird in der deutschen Offenlegungsschrift 37 22 507 eine Schleuderdüngerstreuerbaureihe vorgeschlagen, die ein Baukastensystem darstellt, indem Vorratsbehälter mit verschiedenen Fassungsvermögen in einem unteren Bereich alle gleich ausgebildet sind, aber unterschiedliche Höhen aufweisen, so daß sie wahlweise auf einem Zentralrahmen angeordnet werden können und man dadurch Schleuderdüngerstreuer mit unterschiedlichem Fassungsvermögen einfach erhalten kann.

Der Erfindung liegt die Aufgabe zugrunde, eine gattungsgemäße Schleuderdüngerstreuerbaureihe in ihren Einsatzmöglichkeiten noch weiter zu verbessern.

Gelöst wird diese Aufgabe mit dem kennzeichnenden Merkmal des Anspruchs 1.

Die Grundidee besteht somit bei dieser Erfindung darin, daß in einfacher Weise ein äußerst wirtschaftliches System für die Erstellung einer Schleuderdüngerstreuerbaureihe geschaffen wird, und zwar für Schleuderdüngerstreuer verschiedener Fassungsvermögen und/oder Tragfähigkeit mit der Möglichkeit, unterschiedliche Arbeitsbreitenbereiche einzustellen bzw. diese Schleuderdüngerstreuer für verschiedene Arbeitsbreitenbereiche auszubilden.

Mit den Merkmalen des Anspruchs 1 lassen sich Schleuderdüngerstreuer für verschiedene Arbeitsbreitenbereiche anbieten, und zwar so, daß sich z.B. für 12 m Arbeitsbreitenbereiche für alle Düngerstreuer unterschiedlicher Größe dieser Schleuderstreuerbaureihe Streuorgane für Arbeitsbreitenbereiche von 12 bis 18 m einsetzen lassen. Des weiteren ist es möglich, in diese Schleuderdüngerstreuertypen Streuorgane für mittlere Arbeitsbreitenbereiche, also zusätzliche Arbeitsbreitenbereiche einzusetzen, so daß sich die Düngemittelpartikel über außer 12 m oder 12 bis 18 m z.B. über Arbeitsbreitenbereiche von 20 bis 28 m abschleudern lassen. Des weiteren ist für die größten Düngerstreuer dieser Baureihe vorgesehen, daß weitere zusätzliche Arbeitsbreitenbereiche, also außer 12 bis 18 und 20 bis 28 m, z.B. Arbeitsbreitenbereiche von 30 bis 36 m vorgesehen sind.

Die größte Baureihentype dieser Baureihe kann dann alle Arbeitsbreitenbereiche von 12 bis 36 m abdecken, so daß der Dünger mit dieser Type bei entsprechendem Einsatz der Verteilorgane über einen Arbeitsbreitenbereich von 12 bis 36 m in einfachster Weise abgeschleudert werden kann.

Die mittlere Type kann dann beispielsweise Arbeitsbreitenbereiche von 12 bis 28 m abdecken, während die kleinste Type der Baureihe Arbeitsbreitenbereiche von 12 bis 18 m erreicht.

Der kleinste Düngerstreuer dieser Baureihe hat dann einen schwächeren Rahmen und der Vorratsbehälter weist ein geringeres Fassungsvermögen auf. Diese Type kann aber auch schon so ausgelegt sein, daß sämtliche Wurforgane, die für die gesamte Baureihe vorgesehen sind, auch hier bei entsprechender Anordnung des Leichtschirmes eingesetzt werden können. Diese kleinste Type kann dann wesentlich günstiger angeboten werden, als die größeren Typen dieser Baureihe. Auch kann diese einfache Type mit einer einfachen Handschaltung ausgerüstet sein. Es ist jedoch auch möglich, diese Betätigung für die Dosierorgane gegen komfortablere mit Fernbedienungsvorrichtungen und mit elektronischen Steuerungseinrichtungen wie bei den großen Typen auszurüsten.

Das Entscheidende bei dieser Idee besteht darin, daß für die gesamte Baureihe der verschiedenen Schleuderdüngerstreuertypen, die unterschiedlich große Fassungsvermögen aufweisende Vorratsbehälter besitzen, ein einziges Streuwerk, d.h., eine einzige Streuwerktype einschließlich Dosierorgan für die unterschiedlichen Schleuderscheiben bzw. Wurfschaufeln entwickelt werden, muß welches die Arbeitsbreitenbereiche von 12 bis 36 m und mehr abdeckt. Ohne zusätzlichen Aufwand sind für den Streuer der größten Baugröße der Baureihe Dosier- und Verteilorgane für zumindest drei Arbeitsbreitenbereiche vorgesehen, welche jeweils unverändert mit den erstellten Streutabellen und ermittelten Einstellwerten entsprechend bei den Streuern der kleineren und mittleren Baugröße eingesetzt werden.

Durch die Verwirklichung dieser erfinderischen Idee werden die sehr aufwendig und langwierig entwickelten Streu- und Dosierorgane und die jweilige Zuordnung zueinander für die größte Type dann unmittelbar auch für die Streu- und Dosiereinheit der mittleren und kleineren Typen übernommen. Hierdurch werden die Entwicklungsarbeit und die Entwicklungskosten für die Weiterentwicklung der Streuwerke mehrerer Typen wesentlich reduziert. Dieses ist im Hinblick darauf, daß immer neue und geänderte Dünger auf den Markt kommen, von erheblicher Bedeutung. Durch diese Verwirklichung dieser erfinderichen Idee wird auch die Vorratshaltung sowie der Bau und die Herstellung der nach der Erfindung hergestellten Düngerstreuer dieser erfindungsgemäßen Baureihe erheblich kostengünstiger, so daß die Düngerstreuer dieser neuen Baureihe wesentlich kostengünstiger auf dem Markt angeboten werden können, als dies bisher der Fall ist. Es ist somit in einfacher Weise möglich, auch nachträglich noch, wenn der Freiraum für die Wurforgane in entsprechender Weise, auch bei den kleinen Schleuderdüngerstreuertypen groß genug gehalten wird, so daß dann auch später noch ohne Umrüstung und zusätzliche Arbeiten, nur durch den Einsatz der entsprechenden Verteilorgane, mit den Düngerstreuern der kleinen Typen die große Arbeitsbreitenbereiche zu erreichen.

Es ist also erstmalig möglich geworden, für alle Arbeitsbreitenbereiche von 12 bis 36 m in einfacher Weise ein äußerst wirtschaftliches System für die Erstellung einer Schleuderdüngerstreuerbaureihe mit Vorratsbehältern unterschieldichen Fassungsvermögens zu schaffen, wobei der Freiraum durch die entsprechende Anordnung der Leichtschirme gleichgroß oder wahlweise entsprechend einzurichten ist. Es könnten so Maschinen mit verschiedenen Tragfähigkeiten, verschiedenen Behältern, verschiedenen Rahmen und Antriebsteilen und somit auch zu verschiedenen Preisen angeboten werden.

Die Entwicklung der Dosier- und Verteilorgane beschränkt sich also nur auf den großen Schleuderdüngerstreuertyp, die kleineren Typen sind somit "ein Abfallprodukt der großen Streuer".

Bei dieser Düngerstreuerbaureihe kann also die große Maschine für sämtliche Arbeitsbreitenbereiche eingesetzt werden, wobei die kleinste Type dann den kleinsten Arbeitsbreitenbereich der großen Typen abdeckt.

Weitere Einzelheiten der Erfindung sind der Beispielsbeschreibung und den Zeichnungen zu entnehmen. Hierbei zeigt
- Figur 1: Prinzipdarstellung des kleinen Schleuderdüngerstreuers der erfindungsgemäßen Schleuderüngerstreuerbaureihe in der Ansicht von hinten,
- Figur 2: Prinzipdarstellung des mittleren Schleuderdüngerstreuers der erfindungsgemäßen Schleuderdüngerstreuerbaureihe in der Ansicht von hinten,
- Figur 3: Prinzipdarstellung des größten Schleuderdüngerstreuers der erfindungsgemäßen Schleuderdüngerstreuerbaureihe in der Ansicht von hinten,
- Figur 4: Prinzipdarstellung des kleinen Schleuderdüngerstreuers in der Seitenansicht, wobei der Schleuderdüngerstreuer nur für das Bestreuen der kleinen Arbeitsbreitenbereiche ausgebildet ist,
- Figur 5: Prinzipdarstellung des kleinen Schleuderdüngerstreuers in der Seitenansicht, wobei der Schleuderdüngerstreuer für das Bestreuen der kleineren und mittleren Arbeitsbreitenbereiche ausgebildet ist und
- Figur 6: Prinzipdarstellung des kleinen Schleuderdüngerstreuers in der Seitenansicht, wobei der Schleuderdüngerstreuer für das Bestreuen der kleineren, mittleren und großen Arbeitsbreitenbereiche ausgebildet ist.

Der Schleuderdüngerstreuer weist den Tragrahmen 1 mit den Dreipunktkupplungselementen 2 auf, wobei in dem Tragrahmen 1 der Vorratsbehälter 3 befestigt ist. Der Vorratsbehälter 3 weist das dachförmige Mittelteil 4 auf, wodurch der Vorratsbehälter 3 in seinem unteren Bereich in die trichterförmigen Behälterteile 5 unterteilt wird. In ihrem unteren Bereich weisen diese beiden trichterförmigen Behälterteile 5 jeweils die Bodenplatten 6 auf, in der die bekannte und daher nicht näher dargestellte Auslauföffnung angeordnet ist. Diese Auslauföffnung ist mittels eines bekannten und daher nicht näher dargestellten Schiebers in unterschiedliche Öffnungsweiten einstell- und verschließbar. Die jeweilige, von dem Schieber eingestellte Öffnungsweite der Auslauföffnung bestimmt die Menge des aus dem Vorratsbehälter 3 zu den Schleuderscheiben 7 strömenden Düngerstromes. Die auf der jeweiligen Ausgangswelle 8 der Winkelgetriebe 9 angeordneten Schleuderscheiben 7 verteilen die ihnen in genau einstellbaren Mengen zugeführten Düngemittelpartikel mittels der auf den Schleuderscheiben 7 angeordneten Wurfschaufeln 10. Der Antrieb der Schleuderscheiben 7 erfolgt über das Mittelgetriebe 11, welches mittels einer Gelenkwelle von der Zapfwelle des den Schleuderdüngerstreuer transportierenden Ackerschleppers angetrieben wird. Für das gleichmäßige Zufließen des Düngerstromes aus dem Vorratsbehälter durch die jeweilige Auslauföffnung sorgt die in das jeweilige trichterförmige Behälterteil 5 hineinragende Rührwelle 12. Diese Rührwelle 12 wird in bekannter Weise angetrieben. Die Winkelgetriebe 9 sind an dem Querträger 13 befestigt, der wiederum mit dem Tragrahmen 1 verbunden ist.

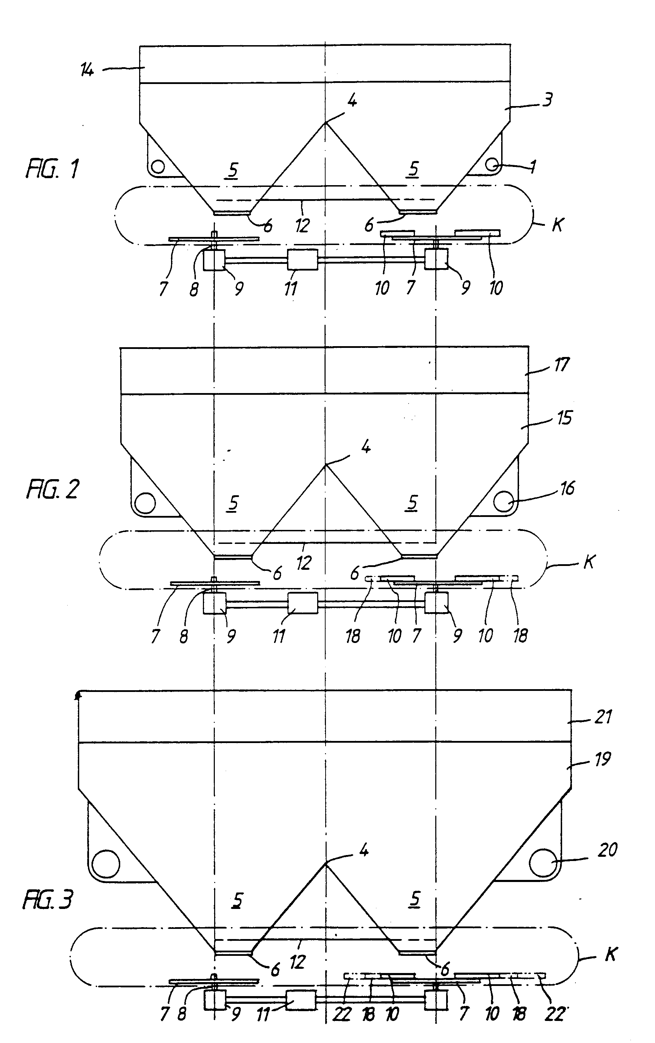

Die im unteren Bereich des jeweiligen trichterförmigen Behälterteils 5 die Auslauföffnung aufweisende Bodenplatte 6 und der jweils unter der Bodenplatte 6 angeordnete Schieber zur Einstellung der der Schleuderscheibe 7 zugeführten Düngemittelmenge und die Rührwelle 12 stellen das Dosierorgan des Schleuderdüngerstreuers dar. Die auf den Ausgangswellen 8 der Winkelgetriebe 9 angeordneten Schleuderscheiben 7 mit ihren Wurfschaufeln 10 bilden das sog. Verteilorgan. Die einzelnen Bauteile der Dosier- und Verteilorgane sind in dem Bereich K angeordnet. Der Vorratsbehälter 3 des kleinen Schleuderdüngerstreuers gemäß Fig. 1 weist zur Vergrößerung seines Fassungsvermögens den Aufsatz 14 auf, welcher auf den Vorratsbehälter 3 einfach aufgesetzt werden kann. Auf diese Weise läßt sich das Fassungsvermögen des Vorratsbehälters 3 beispielsweise von 750 l auf 1200 l vergrößern. Mit den auf den Schleuderscheiben 7 angeordneten Wurfschaufeln 10 dieses kleinen Schleuderdüngerstreuers lassen sich die Düngemittelpartikel beispielsweise über einen Arbeitsbreitenbereich von 12 bis 18 m abschleudern.

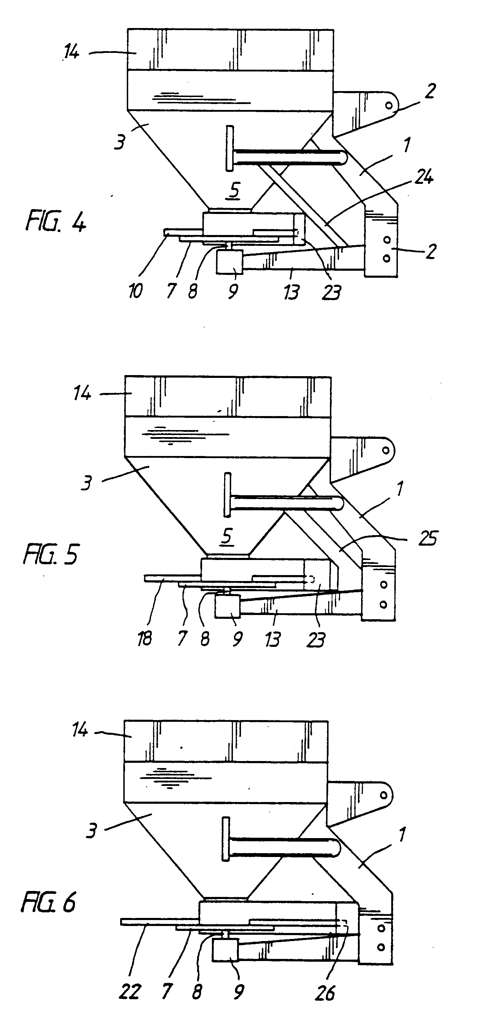

Die Figur 2 zeigt einen größeren Schleuderdüngerstreuer, wobei sich die Bezeichnung "größeren" auf das Fassungsvermögen des Vorratsbehälters 15 und auf die zu bestreuenden Arbeitsbreitenbereiche bezieht. Dieser Vorratsbehälter 15 ist in dem Tragrahmen 16 befestigt, wobei der Tragrahmen 16 gegenüber dem Tragrahmen 1 des Schleuderdüngerstreuers gemäß Fig. 1 entsprechend des größeren Fassungsvermögens des Vorratsbehälters 15, stabiler ausgebildet ist. Das Fassungsvermögen des Vorratsbehälters 15 läßt sich ebenfalls auf einfachste Weise durch den Aufsatz des Aufsatzes 17 auf den Vorratsbehälter 15 vergrößern. So ist es beispielsweise möglich, daß der Vorratsbehälter 15 ein Fassungsvermögen von 1000 l aufweist, welches durch den Aufsatz 17 beispielsweise auf 1800 l vergrößert wird.

Auch dieser Vorratsbehälter 15 weist das dachförmige Mittelteil 4 auf, durch welchen der Vorratsbehälter 15 in die trichterförmigen Behälterteile 5 aufgeteilt wird. Im unteren Bereich dieser trichterförmigen Behälterteile 5 ist jeweils die Bodenplatte 6 angeordnet, in welcher sich die Auslauföffnung befindet. Unterhalb der jeweiligen Bodenplatten 6 ist ein Schieber angeordnet, durch welchen die in der Bodenplatte 6 angeordnete Auslauföffnung in unterschiedlichen Öffnungsweiten einstellbar und verschließbar ist. Unterhalb der jeweiligen Auslauföffnung der Bodenplatte 6 befindet sich die auf der Ausgangswelle 8 des Winkelgetriebes 9 angeordnete Schleuderscheibe 7 mit ihren Wurfschaufeln 10. Die Winkelgetriebe 9 sind mit dem Mittelgetriebe 11 antriebsverbunden, welches über eine Gelenkwelle von der Zapfwelle des den Schleuderdüngerstreuer transportierenden Ackerschleppers antreibbar ist. Damit die Menge des auszustreuenden Düngemittels, welche mittels des Schiebers eingestellt wird, der entsprechend der auszustreuenden Düngemittelmenge einen entsprechenden Querschnitt der Auslauföffnung freigibt, auch durch die Auslauföffnung strömt, ragt die angetriebene Rührwelle 12 in den unteren Bereich der trichterförmigen Behälterteile 5, wobei sie unmittelbar über den Auslauföffnungen angeordnet ist.

Dieser Schleuderdüngerstreuer gemäß Fig. 2 unterscheidet sich also nur von dem Schleuderdüngerstreuer gemäß Fig. 1 durch das große Fassungsvermögen seines Vorratsbehälters 15. Die in dem Bereich K angeordneten Bauteile der Dosier- und Verteilorgane sind in identischer Weise die gleichen wie die Bauteile der Dosier- und Verteilorgane des kleinen Schleuderdüngerstreuers gemäß Fig. 1. Der einzige Unterschied bei den von der Schleuderscheibe 7 und den Wurfschaufeln 10 gebildeten Verteilorganen besteht darin, daß die Wurfschaufeln 10 gegen die eine größere Länge aufweisenden und mit strichpunktierten Linien angedeuteten Wurfschaufeln 18 ausgetaucht werden können. Mittels dieser längeren Wurfschaufeln 18 lassen sich dann beispielsweise die Düngemittelpartikel über einen Arbeitsbreitenbereich von 20 bis 28 m anschleudern, so daß der Gesamtarbeitsbereich dieses Schleuderdüngerstreuers sich über den Arbeitsbreitenbereich von 12 bis 28 m erstreckt.

Der Schleuderdüngerstreuer gemäß Fig. 3 unterscheidet sich nur durch das größere Fassungsvermögen seines Vorratsbehälters 19 von den Schleuderdüngerstreuern gemäß der Fig. 1 und 2. Entsprechend seines größeren Fassungsvermögens des Vorratsbehälters 19 ist natürlich auch der Tragrahmen 20 in entsprechender Weise stärker dimensioniert. Das Fassungsvermögen des Vorratsbehälters 19, welches beispielsweise 1300 l betragen kann, läßt sich durch das Aufsetzen des Aufsatzteiles 21 beispielsweise auf 2000 l vergrößern. Der Vorratsbehälter 19 dieses Schleuderdüngerstreuers weist ebenfalls ein dachförmiges Mittelteil 4 auf, wodurch der Vorratsbehälter 19 in die beiden trichterförmigen Behälterteile 5 aufgeteilt wird. Unter diesen trichterförmigen Behälterteilen 5 ist ebenfalls die Bodenplatte 6 angeordnet, in der sich die Auslauföffnung befindet. Unter dieser Bodenplatte 6 ist der die Auslauföffnung 6 in unterschiedliche Öffnungswelten einstellende und verschließende Schieber angeordnet. Diese Bauteile, um die im unteren Bereich der trichterförmigen Behälterteile 5 angeordneten Bodenplatte 6 und die Rührwelle 12 bilden das Dosierorgan. Zur gleichmäßigen Düngerzuführung durch die Auslauföffnungen der Bodenplatte 6 ragt die antreibbare Rührwelle 12 bis in den unteren Bereich der jeweiligen trichterförmigen Behälterteile 5 hinein. Die aus den Auslauföffnungen herausströmenden Düngemittelpartikel gelangen auf die auf den Ausgangswellen 8 der Winkelgetriebe 9 angeordneten Schleuderscheiben 7 und werden mittels der auf den Schleuderscheiben 7 angeordneten Wurfschaufeln 10 verteilt. Der Antrieb der Winkelgetriebe 9 erfolgt über das Mittelgetriebe 11 mittels einer dieses Mittelgetriebe 11 mit der Zapfwelle des den Schleuderdüngerstreuer transportierenden Ackerschleppers verbundenen Gelenkwelle.

Die die Dosier- und Verteilorgane bildenden Bauteile sind auch hier in dem Bereich K angeordnet, der bei allen Schleuderdüngerstreuern der Schleuderdüngerstreuerbaureihe gleich ausgebildet ist. Bei dem Schleuderdüngerstreuer gemäß Fig. 3 mit dem großen Vorratsbehälter 19 lassen sich die Düngemittelpartikel durch den Einsatz der langen Wurfschaufeln 22 über einen Arbeitsbereich von beispielsweise 30 bis 36 m abschleudern. Ebenso ist es möglich, auf der Schleuderscheibe 7 die Wurfschaufeln 18 für den Arbeitsbreitenbereich von 20 bis 28 m oder aber die Wurfschaufeln 10 für den Arbeitsbreitenbereich von 12 bis 18 m anzuordnen, so daß sich der gesamte, mit diesem Schleuderdüngerstreuer auszustreuende Arbeitsbreitenbereich von 12 bis 36 m erstreckt.

Die Möglichkeit zur Anordnung der unterschiedlichen Wurfschaufeln 10, 18 und 22 ergibt sich durch die Anordnung der mit den jeweiligen Schleuderscheiben zusammenwirkenden Leitschirme 23, die verhindern, daß die von den Wurfschaufeln 10, 18 und 22 abzuschleudernden Düngemittelpartikel nach vorn in Richtung der Dreipunktkupplungselemente 2 abgeschleudert werden. Die unterschiedlichen Längen der Wurfschaufeln 10, 18 und 22 erfordern also bedingt durch den größer werdenden Rotationsradius der Wurfschaufeln einen unterschiedlich großen Freiraum für die Anordnung der jeweiligen Leitschirme. Dieses bedingt konstruktive Veränderungen an dem jeweiligen Tragrahmen des Schleuderdüngerstreuers.

Serienmäßig ist bei der Ausbildung der kleinen, mittleren und großen Schleuderdüngerstreuer gemäß den Fig. 1 bis 3 der Schleuderdüngerstreuerbaureihe ohne konstruktiven Mehraufwand zur Bildung des für die unterschiedlichen Rotationsradien der Wurfschaufeln 10, 18 und 22 Freiraumes vorgesehen, daß sich mittels des kleinen Schleuderdüngerstreuers gemäß Fig. 1 die Düngemittelpartikel über einen Arbeitsbreitenbereich von 12 bis 18 m und bei dem mittleren Schleuderdüngerstreuer gemäß Fig. 2 die Düngemittelpartikel über einen Arbeitsbreitenbereich von beispielsweise 12 bis 28 m und bei dem großen Schleuderdüngerstreuer gemäß Fig. 3 die Düngemittelpartikel durch Einsatz der entsprechenden Wurfschaufeln 10, 18 bzw. 22 über einen Arbeitsbreitenbereich von 12 bis 38 m abschleudern lassen.

Durch besondere konstruktive Maßnahmen ist es jedoch auch möglich, den kleinen Schleuderdüngerstreuer gemäß Fig. 1 derart auszubilden, daß sich die Düngemittelpartikel mittels dieses Schleuderdüngerstreuers auch über einen Arbeitsbreitenbereich von 12 bis 36 m abschleudern lassen.

Die Fig. 4 zeigt beispielsweise einen Schleuderdüngerstreuer für das Abschleudern der Düngemittelpartikel über den Arbeitsbreitenbereich von 12 bis 18 m, wobei der Tragrahmen 1 so ausgebildet ist, daß sich nur ein kleiner Freiraum für die Anordnung des Leitbleches 23 ergibt.

Durch die Anordnung der Strebe 24 ist es möglich, den Tragrahmen 1 in einer besonders leichten Bauweise zu gestalten, so daß sich eine preiswerte Lösung zur Herstellung eines Schleuderdüngerstreuers ergibt.

Soll nun der kleine Schleuderdüngerstreuer auch für das Ausstreuen der Düngemittelpartikel für einen Arbeitsbreitenbereich von 20 bis 28 m umrüstbar sein, muß der Schleuderdüngerstreuer einen entsprechenden Freiraum für die Anordnung des Leitbleches 23 in einem anderen Abstand von der Schleuderscheibenantriebswelle 8 bzw. durch Austauschen des Leitschirmes gegen einen anders ausgebildeten Leitschirm, aufweisen, so daß der Einsatz der längeren Wurfschaufeln 18 möglich wird. Die Anordnung des Leitschirmes 23 in einem anderen Abstand zur Schleuderscheibenantriebswelle 8 erfordert eine andere Ausbildung des Tragrahmens 1, wobei der Tragrahmen 1 mittels der Strebe 25 verstärkt wird.

Durch besondere konstruktive Maßnahmen hinsichtlich der Gestaltung des Tragrahmens 1 des kleinen Schleuderdüngerstreuers lassen sich auch die großen Wurfschaufeln 22 auf der Schleuderscheibe 7 anordnen, wodurch es auch mit dem kleinen Schleuderdüngerstreuer möglich ist, die Düngemittelpartikel über den großen Arbeitsbreitenbereich von 30 bis 36 m und somit auch über den gesamten Arbeitsbreitenbereich von 12 bis 36 m abzuschleudern. Hierbei muß der Tragrahmen 1 derart ausgebildet sein, daß sich ein großer Freiraum für die Anordnung des mit den langen Wurfschaufeln 22 zusammenwirkenden Leitschirmes 26 ergibt. Dieses bedingt eine stabilere Ausgestaltung des Tragrahmens 1.

Dadurch, daß der Bereich K, in dem die Dosier- und Verteilorgane angeordnet sind, bei allen Schleuderdüngerstreuertypen, d.h, beim kleinen, beim mittleren also auch beim großen Schleuderdüngerstreuer, gleich ausgebildet ist, ergibt sich ein äußerst wirtschaftliches System für die Erstellung einer Schleuderdüngerstreuerbaureihe. Mit in die Erfindung eingeschlossen werden soll, daß sich die in dem Bereich K angeordneten Dosier- und Verteilorgane auch als Streuwerk an einem Großflächendüngerstreuer anordnen lassen.

## Patentansprüche

1. Schleuderdüngerbaureihe, umfassend Schleuderdüngerstreuer mit unterschiedlichem, insbesondere kleinem, mittlerem und großem Fassungsvermögen und/oder Tragfähigkeit, wobei die Schleuderdüngerstreuer einen Tragrahmen (1), einen Vorratsbehälter (3, 15, 19), Leitschirme, einstellbare Dosierorgane sowie als angetriebene Schleuderscheiben mit Wurforganen ausgebildete Verteilorgane aufweisen,
**dadurch gekennzeichnet,**
daß die Schleuderdüngerbaureihe Schleuderdüngerstreuer für unterschiedliche Arbeitsbreitenbereiche aufweist und daß der Bereich (K), in dem die Dosier- und Verteilorgane angeordnet sind, baugleich hinsichtlich der Lagezuordnung der Dosierorgane (6) zu den Verteilorganen (7) für jeden Schleuderdüngerstreuer der unterschiedlichen Arbeitsbreitenbereiche ausgeführt ist, wobei die Verteilorgane zur Erreichung verschiedener Arbeitsbreitenbereiche austauschbar sind und daß für den Streuer der größten Baugröße der Baureihe Verteilorgane (7) für zumindest drei Arbeitsbreitenbereiche vorgesehen sind, die jeweils unverändert mit für den Streuer der kleinen und mittleren Arbeitsbreitenbereiche ermittelten Einstellwerten eingesetzt werden.

2. Baureihe nach Anspruch 1, **dadurch gekennzeichnet**, daß die Schleuderscheiben (7) und/oder ihre Wurfschaufeln (10, 18, 22) leicht lösbar und austauschbar ausgebildet sind.

3. Baureihe nach Anspruch 2, **dadurch gekennzeichnet,** daß die Leitschirme (23, 26) in verschiedenen Abständen von der Schleuderscheibenantriebswelle (8) an dem Streuer befestigbar sind.

4. Baureihe nach Anspruch 2, **dadurch gekennzeichnet,** daß die Leitschirme (23, 26) gegen andere Leitschirme austauschbar sind.

## Claims

1. Series of centrifugal fertiliser broadcasters, including centrifugal fertiliser broadcasters which have different, more especially small, medium and large, capacities and/or carrying capacities, the centrifugal fertiliser broadcasters having a supporting frame (1), a hopper (3, 15, 19), guide plates, adjustable metering members and distributing members, which are configured as driven centrifugal discs provided with throwing members, characterised in that the series of centrifugal fertiliser broadcasters has centrifugal fertiliser broadcasters for different working width ranges, and in that the region (K), in which the metering and distributing members are disposed, is configured to be structurally identical in respect of the positional association between the metering members (6) and the distributing members (7) for each centrifugal fertiliser broadcaster of the different working width ranges, the distributing members being interchangeable to achieve different working width ranges, and in that distributing members (7) for at least three working width ranges are provided for the broadcaster having the largest structural dimension of the series, each of said distributing means being used, unchanged, with adjustment values determined for the broadcaster of the small and medium working width ranges.

2. Series according to claim 1, characterised in that the centrifugal discs (7) and/or their throwing vanes (10, 18, 22) are configured to be easily detachable and interchangeable.

3. Series according to claim 2, characterised in that the guide plates (23, 26) are mountable on the broadcaster at different spacings from the centrifugal disc drive shaft (8).

4. Series according to claim 2, characterised in that the guide plates (23, 26) are exchangeable for other guide plates.

## Revendications

1. Série d'épandeurs centrifuges d'engrais comprenant des épandeurs centrifuges d'engrais ayant des capacités différentes, notamment des capacités petites, moyennes et grandes et/ou une résistance correspondante, les épandeurs centrifuges comportant un châssis (1), un réservoir d'alimentation (3, 15, 19), des écrans de guidage, des organes de dosage réglable ainsi que des organes de distribution en forme de disques d'épandage entraînés équipés d'organes d'éjection, caractérisée en ce que les épandeurs centrifuges sont prévus pour des plages de largeurs de travail différentes et en ce que la plage K dans laquelle se trouvent les organes de dosage et de distribution, est réalisée sur le plan constructif, identique au montage des organes de dosage (6) pour les organes de distribution (7) de chaque épandeur centrifuge pour des plages de largeurs de travail différentes, les organes de distribution pouvant être échangés pour atteindre des plages de largeurs de travail différentes et en ce que pour l'épandeur correspondant à la plus grande dimension de la série, les organes de distribution (7) sont prévus pour au moins trois plages de largeurs de travail qui servent chaque fois de manière inchangée pour l'épandeur avec les valeurs de réglage pour la petite et la moyenne plages de largeurs de travail.

2. Série constructive selon la revendication 1, caractérisée en ce que les disques d'épandage (7) et/ou leurs palettes d'éjection (10, 18, 22) sont réalisés facilement amovibles et échangeables.

3. Série constructive selon la revendication 2, caractérisée ne ce que les palettes de guidage (23, 26) sont fixées à des distances différentes de l'axe d'entraînement (8) des disques d'épandage sur l'épandeur.

4. Série constructive selon la revendication 2, caractérisée en ce que les écrans de guidage (23, 26) peuvent être remplacés par d'autres écrans de guidage.
